# EUROPÄISCHE PATENTANMELDUNG

(11) **EP 4 145 689 A1**
(43) Veröffentlichungstag der Anmeldung: **08.03.2023**
(21) Anmeldenummer: 21194379.0
(22) Anmeldetag: 01.09.2021
(51) Int. Cl.: H02M 1/15

(54) **VERFAHREN ZUR VERMEIDUNG VON FLICKEREMISSIONEN VON NETZUMRICHTERN**

(71) Anmelder: Siemens Aktiengesellschaft, 80333 München (DE)
(72) Erfinder: Weis, Benno, 91334 Hemhofen (DE)
(74) Vertreter: Siemens Patent Attorneys

(57) **Zusammenfassung**

Die Erfindung betrifft ein Verfahren zur Vermeidung von Flickeremissionen eines aktiven Netzumrichters (2) an einem Stromversorgungsnetz (13),
wobei ein Umrichter (1) einen Lastumrichter (3) zur Versorgung einer elektrischen Last, einen aktiven Netzumrichter (2) an einem Anschlusspunkt (A) des elektrischen Stromversorgungsnetzes (13), zur Speisung eines Zwischenkreises (4) mit einer Zwischenkreisspannung U_{ZK} des Umrichters (1), wobei der Zwischenkreises (4) zumindest einen Kondensator (5) aufweist, durch folgende Schritte:
- Ermittlung der Netzimpedanz Z_{N} des Stromversorgungsnetzes (13) aus einer Netzanalyse des aktiven Netzumrichters (2) an dem Anschlusspunkt (A),
- Regelung des aktiven Netzumrichters (2) auf eine vorgebbare zulässige Netzstromänderung ΔI_{N}, bei der zulässige Änderungen des Effektivwertes von aufeinanderfolgenden Spannungshalbschwingungen der Spannung U_{A} am Anschlusspunkt (A) im Hinblick auf die Netzimpedanz Z_{N} eingehalten werden.

## Beschreibung

Die Erfindung betrifft ein Verfahren zur Vermeidung von Flickeremissionen in elektrischen Stromversorgungsnetzen für aktive und passive Netzstromrichter, als auch an ein derartiges Netz anschließbare Verbraucher.

Als Umrichter werden Geräte bezeichnet, die ein Wechsel- oder Drehspannung mit elektronischen Mitteln in eine neues Wechsel- oder Drehspannungssystem umwandeln.

Dabei weist ein Umrichter bzw. Frequenzumrichter einen Netzumrichter auf, der die Netzspannung für einen Gleichspannungszwischenkreis gleichrichtet und einen Lastumrichter, der die Spannung des Zwischenkreises für einen Verbraucher, also eine Last wechselrichtet.

Aktive Netzumrichter, wie z.B. AFEs (**A**ctive-**F**ront-**E**nd) für Antriebsanwendungen regeln ihre Zwischenkreisspannung U_{ZK} auf einen konstanten Wert. Änderungen der Leistungsaufnahme in einer angeschlossenen Last, z.B. eines Motors spiegeln sich somit unmittelbar in dem aufgenommenen Netzstrom I_{N} des Umrichters wider. Der Netzstrom I_{N} verursacht durch seinen Spannungsabfall im Innenwiderstand Z_{N} des Netzes eine Spannungsänderung in der Spannung U_{A} am Anschlusspunkt A des Umrichters. Damit sind Laständerungen unmittelbar in der Spannung U_{A} sichtbar.

Dabei sind Grenzwerte für zulässige Änderungen des Effektivwertes von aufeinanderfolgenden Spannungshalbschwingungen der Spannung U_{A} am Anschlusspunkt A einzuhalten. Die zulässige Höhe der Spannungsänderung ist dabei abhängig von deren Häufigkeit. Ein Minimum der zulässigen Spannungsänderung liegt bei ca. 1000 Änderungen pro Minute, d.h. 166Hz. Werden diese Grenzwerte überschritten tritt das Phänomen "Flicker" auf.

Dieses äußert sich in Helligkeitsschwankungen von Beleuchtungseinrichtungen, die gesundheitsschädlich sind.

Als Flicker werden somit elektrische Spannungsschwankungen in Stromversorgungsnetzen bezeichnet, welche zu einer visuell wahrnehmbaren Schwankung der Leuchtdichte bei ungeregelten elektrischen Leuchtmitteln wie Leuchtstofflampen oder Glühlampen führen. Bei ausreichend elektronisch geregelten Leuchtmitteln, wie LED-Leuchtmitteln oder Kompaktleuchtstofflampen, sind Flicker aufgrund der Vorschaltelektronik oft nicht optisch wahrzunehmen.

Flickererscheinungen sind eines von mehreren Kriterien zur Beurteilung der Spannungsqualität in Stromversorgungsnetzen und der Bewertung von Netzrückwirkungen von Verbrauchern in solchen Netzen. Dabei bezeichnet Flicker Schwankungen der Leuchtdichte, die ihren Ursprung im Versorgungsnetz haben, während Lichtflimmern Schwankungen in der Helligkeit beschreibt, die durch die Konstruktion des Leuchtmittels bedingt sind.

Die Betriebsspannung in Stromversorgungsnetzen ist zeitlichen Schwankungen unterworfen. Regelmäßige Lastschwankungen größerer Verbraucher führen zu schwankenden Stromstärken im Netz. Diese Stromschwankungen verursachen abhängig von der Netzimpedanz einen schwankenden Spannungsabfall in den Leitungen. Zusätzliche Quellen für Spannungsschwankungen sind Intermodulationen im Bereich der Oberschwingungen der Netzfrequenz, welche durch die Verzerrungsblindleistung von nichtlinearen Verbrauchern verursacht werden.

Weist die angeschlossene Last eines Frequenzumrichters periodische Laständerungen auf, die zu Spannungsänderungen über dem Flickergrenzwert in der Spannung U_{A} führen, so darf diese Anlage nicht am öffentlichen Stromversorgungsnetz z.B. einem Niederspannungsnetz angeschlossen werden.

In Industrieanlagen gelten zwar keine normativen Flickergrenzwerte, aber Helligkeitsschwankungen von Beleuchtungsmitteln beeinträchtigen auch dort die Gesundheit von Arbeitern in Industrieanlagen.

Nach dem Stand der Technik dürfen Anlagen mit derartigen Laständerungen nur an Stromversorgungsnetze angeschlossen werden, in denen die Netzimpedanz Z_{N} so klein ist, dass Laständerungen keine unzulässigen Spannungsänderungen erzeugen. Die Projektierung von Geräten hierfür ist sehr aufwändig und unsicher.

Ausgehend davon liegt der Erfindung die Aufgabe zugrunde ein Verfahren zur Vermeidung von Flickeremissionen eines an einem Stromversorgungsnetz angeschlossenen Umrichters bereitzustellen. Des Weiteren sollen Geräte, die mit einem derartigen Umrichter ausgestattet sind, derartige Flickermissionen vermeiden.

Die Lösung der gestellten Aufgabe gelingt durch ein Verfahren zur Vermeidung von Flickeremissionen eines aktiven Netzumrichters an einem Stromversorgungsnetz, wobei ein Umrichter einen Lastumrichter zur Versorgung einer elektrischen Last, einen aktiven Netzumrichter an einem Anschlusspunkt A des elektrischen Stromversorgungsnetzes, zur Speisung eines Zwischenkreises mit einer Zwischenkreisspannung U_{ZK} des Umrichters, wobei der Zwischenkreises zumindest einen Kondensator aufweist, durch folgende Schritte:
- Ermittlung der Netzimpedanz Z_{N} des Stromversorgungsnetzes aus einer Netzanalyse des aktiven Netzumrichters an dem Anschlusspunkt A,
- Regelung des aktiven Netzumrichters auf eine vorgebbare zulässige Netzstromänderung ΔI_{N}, bei der zulässige Änderungen des Effektivwertes von aufeinanderfolgenden Spannungshalbschwingungen der Spannung U_{A} am Anschlusspunkt A im Hinblick auf die Netzimpedanz Z_{N} eingehalten werden.

Die Grundidee dieser Erfindung liegt darin, dass die Regelung des aktiven Netzstromrichters nicht mehr allein auf eine konstante Zwischenkreisspannung regelt, sondern Änderungen in der Zwischenkreisspannung bewusst zulässt, um zu verhindern, dass Änderungen der Leistungsaufnahme der Last, z.B. einem Motor im Netzstrom I_{N} sichtbar werden. Der zumindest eine Zwischenkreiskondensator wird dabei als Energiespeicher genutzt, um vorzugsweise geringe Laständerungen auszugleichen.

Die Netzimpedanz Z_{N} ist aus einer Netzanalyse des aktiven Netzstromrichters bekannt.

Erfindungsgemäß berechnet nunmehr die Regelung des aktiven Netzstromrichters fortlaufend die maximal zulässige Netzstromänderung ΔI_{N}, bei der die Flickergrenzwerte gerade noch eingehalten werden. Auf diese maximal zulässige Änderung wird die Stromänderung in I_{N} begrenzt.

Die Flickergrenzwerte gelten für die einzelnen Phasenspannungen am Anschlusspunkt U_{A} gegen den Sternpunkt des Stromversorgungsnetzes, weil Beleuchtungseinrichtungen in der Regel einphasig angeschlossen werden.

In einer vorteilhaften Ausführungsform der Erfindung werden die zulässigen Stromänderungen daher für alle drei Netzphasen getrennt berechnet.

Die Begrenzung der Stromänderung I_{N} führt zu Änderungen in der Zwischenkreisspannung U_{ZK} des Umrichters. Mit steigenden Laständerungen kann dies dazu führen, dass die Zwischenkreisspannung die Abschaltschwelle für Über- oder Unterspannung erreicht.

In diesem Fall kann entweder eine Abschaltung des Verbrauchers in Kauf genommen werden oder aber eine Verletzung der Flickergrenzwerte.

Um diesen Zustand für die weitere Betriebsdauer zu vermeiden, erzeugt die Regelung des Umrichters in diesem Fall erfindungsgemäß eine Warnmeldung, dass z.B. ein zusätzlicher Zwischenkreiskondensator angeschlossen bzw. zugeschaltet werden sollte, um diesen Zielkonflikt in Zukunft zu vermeiden. Aus der Höhe der Überschreitung der zulässigen Stromänderung ΔI_{N} kann zudem berechnet werden, wieviel Zubau der Zwischenkreiskapazität erforderlich ist, um derartige Lastschwankungen zukünftig auszugleichen.

In einer vorteilhaften erfindungsgemäßen Lösung wird diese Warnung nicht erst bei Erreichen der Abschaltschwelle abgesetzt, sondern bereits vorher, z.B. bei einem 10%-igen Abstand von der Abschaltschwelle.

In einer weiteren vorteilhaften Ausgestaltung wird der Algorithmus zur Vorausberechnung der Änderungen des Netzstromes I_{N} in eine Projektierungssoftware für Antriebe implementiert. Damit ist es möglich, für eine konkrete Kundenanlage mit zu erwartenden Lastspielen und einer zu erwartenden Netzimpedanz die erforderliche Zwischenkreiskapazität zu projektieren, mit der Flickergrenzwerte ohne Abschaltungen wegen Über- oder Unterspannung eingehalten werden können.

Die Lösung der gestellten Aufgabe gelingt auch durch ein Verfahren zur Vermeidung von Flickeremissionen eines passiven Netzumrichters an einem Stromversorgungsnetz, wobei ein Umrichter einen Lastumrichter zur Versorgung einer elektrischen Last, einen passiven Netzumrichter an einem Anschlusspunkt A des elektrischen Stromversorgungsnetzes, zur Speisung eines Zwischenkreises mit einer Zwischenkreisspannung U_{ZK} des Umrichters, wobei der Zwischenkreises zumindest einen Kondensator aufweist durch folgende Schritte:
- Speicherung von lokalen Maxima der Zwischenkreisspannung U_{ZK} und daraus Ermittlung der Spannungsschwankung am Anschlusspunkt A des Umrichters am Stromversorgungsnetz,
- Regelung des Netzstromes I_{N}, um die Zwischenkreisspannung U_{ZK} in einem Bereich zu halten, der die Flickeremissionen einhält, indem die zulässigen Änderungen des Effektivwertes von aufeinanderfolgenden Spannungshalbschwingungen der Spannung U_{A} am Anschlusspunkt A eingehalten werden.

Das erfindungsgemäße Verfahren wird somit auch für passive Netzstromrichter mit Diodeneinspeisung verwendet werden. Da einem passiven Diodengleichrichter in der Regel die Netzimpedanz nicht bekannt ist, speichert dieser die lokalen Maxima der Zwischenkreisspannung. Diese entsprechen den Maxima der Netzspannung am Anschlusspunkt A. Aus dem Unterschied zwischen diesen Maxima kann die Spannungsschwankung am Anschlusspunkt A bestimmt werden.

Erfindungsgemäß wird die Beobachtungszeit für die Änderungen der Spannung U_{A} begrenzt, z.B. auf einen Zeitraum von einer Sekunde. Damit wird verhindert, dass Änderung in der idealen Netzspannung U_{N} von anderen exteren Verbrauchern fälschlicherweise als Flickeremission fehlinterpretiert werden.

Um dementsprechende Fehlinterpretationen weiter zu reduzieren, wird erfindungsgemäß eine zeitliche Korrelation zwischen Änderungen der Zwischenkreisspannung und der Änderungen der Leistung am Lastausgang hergestellt. Nur wenn die Änderungen der Zwischenkreisspannung auch mit Leistungsänderungen an diesem Geräteausgang zeitlich korrelieren, wird die Spannungsänderung als Flicker interpretiert. Damit wird sichergestellt, dass nicht Unsymmetrien in der Netzspannung als Flicker interpretiert werden.

Auch bei dem passiven Netzumrichter führt eine Begrenzung der Stromänderung I_{N} zu Änderungen in der Zwischenkreisspannung U_{ZK} des Umrichters. Mit steigenden Laständerungen kann dies dazu führen, dass die Zwischenkreisspannung die Abschaltschwelle für Über- oder Unterspannung erreicht.

In diesem Fall kann entweder eine Abschaltung des Verbrauchers in Kauf genommen werden oder aber eine Verletzung der Flickergrenzwerte.

Um diesen Zustand für die weitere Betriebsdauer zu vermeiden, erzeugt die Regelung des Umrichters in diesem Fall erfindungsgemäß eine Warnmeldung, dass z.B. ein zusätzlicher Zwischenkreiskondensator angeschlossen bzw. zugeschaltet werden sollte, um diesen Zielkonflikt in Zukunft zu vermeiden. Aus der Höhe der Überschreitung der zulässigen Stromänderung ΔI_{N} kann zudem berechnet werden, wieviel Zubau der Zwischenkreiskapazität erforderlich ist, um derartige Lastschwankungen zukünftig auszugleichen.

In einer vorteilhaften erfindungsgemäßen Lösung wird diese Warnung nicht erst bei Erreichen der Abschaltschwelle abgesetzt, sondern bereits vorher, z.B. bei einem 10%-igen Abstand von der Abschaltschwelle.

In einer weiteren vorteilhaften Ausgestaltung wird der Algorithmus zur Vorausberechnung der Änderungen des Netzstromes I_{N} in eine Projektierungssoftware für Antriebe implementiert. Damit ist es möglich, für eine konkrete Kundenanlage mit zu erwartenden Lastspielen und einer zu erwartenden Netzimpedanz die erforderliche Zwischenkreiskapazität zu projektieren, mit der Flickergrenzwerte ohne Abschaltungen wegen Über- oder Unterspannung eingehalten werden können.

Die Lösung der gestellten Aufgabe gelingt auch durch Verwendung der erfindungsgemäßen Verfahren zur Regelung eines aktiven Netzumrichters oder zur Regelung eines passiven Netzumrichters bei einphasigen Verbrauchern, insbesondere Haushaltsgeräte und dreiphasigen Verbrauchern, insbesondere elektrischen Antrieben.

Mit den erfindungsgemäßen Lösungen können Geräte in Anwendungen eingesetzt werden, die heute nicht möglich sind. Beschwerden von Kunden über Flickeremissionen können somit vermieden werden.

Des Weiteren wird für Kunden die Projektierung von elektrischen Antrieben vereinfacht.

Die Lösung der gestellten Aufgabe gelingt auch durch einen Umrichter mit einem Lastumrichter zur Versorgung einer elektrischen Last, einem aktiven Netzumrichter an einem Anschlusspunkt A eines elektrischen Stromversorgungsnetzes, zur Speisung eines Zwischenkreises des Umrichters, wobei der Zwischenkreises zumindest einen Kondensator aufweist, wobei der Umrichter das erfindungsgemäße Verfahren bei einem aktiven Netzumrichter umsetzt, um so unzulässige Flickeremissionen zu vermeiden.

Die Lösung der gestellten Aufgabe gelingt auch durch einen Umrichter mit einem Lastumrichter zur Versorgung einer elektrischen Last, einem passiven Netzumrichter an einem Anschlusspunkt A eines elektrischen Stromversorgungsnetzes, zur Speisung eines Zwischenkreises des Umrichters, wobei der Zwischenkreises zumindest einen Kondensator aufweist, wobei der Umrichter das erfindungsgemäße Verfahren bei einem passiven Netzumrichter umsetzt, um so unzulässige Flickeremissionen zu vermeiden.

Die Lösung der gestellten Aufgabe gelingt auch durch elektrische Verbraucher, u.a. wie elektrische Antriebe, Haushaltsgeräte mit einem ein- oder dreiphasigen erfindungsgemäßen Umrichter.

Die Erfindung sowie weitere vorteilhafte Ausgestaltungen der Erfindung werden anhand prinzipiell dargestellter Ausführungsbeispiele näher erläutert, darin zeigen:
- FIG 1: eine Prinzipdarstellung einer Last an einem Umrichter mit aktivem Netzumrichter,

- FIG 2: Ermittlungen von Spannungsschwankungen an einem Umrichter mit einem passiven Netzumrichter.

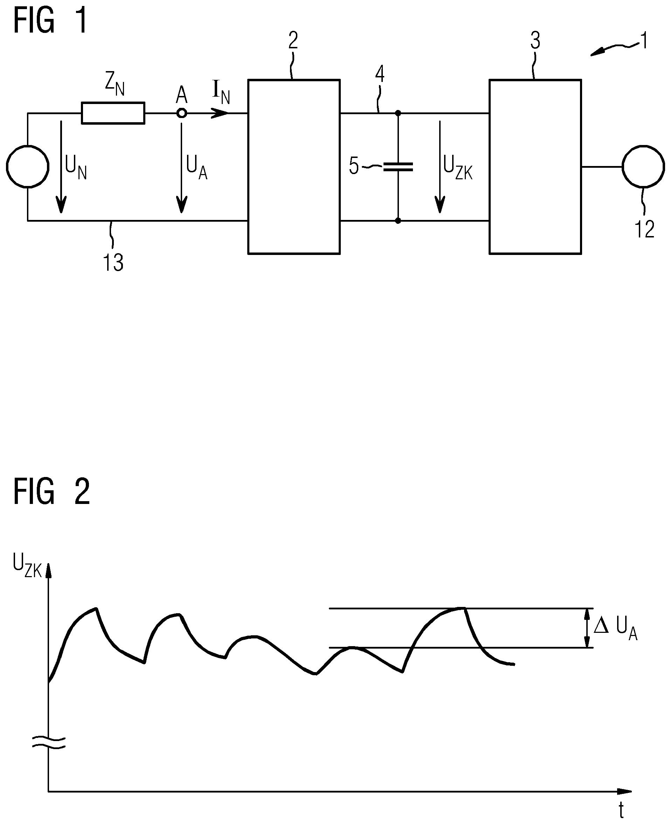

FIG 1 zeigt eine Prinzipdarstellung eines Umrichters 1 mit einer Last, z.B. eines Motors 12, mit aktiven Netzumrichter 2, der eine Netzspannung U_{N} für einen Gleichspannungszwischenkreis 4 gleichrichtet und einen Lastumrichter 3, der die Spannung des Zwischenkreises U_{ZK} für den Motor 12 wechselrichtet. Der Umrichter 1 ist an einem Anschlusspunkt A mit einem Stromversorgungsnetz 13 elektrisch verbunden und bezieht dabei einen Netzstrom I_{N}.

Änderungen in der Leistungsaufnahme des Motors 12 spiegeln sich somit unmittelbar in dem aufgenommenen Netzstrom I_{N} des Umrichters 1 wider. Der Netzstrom I_{N} verursacht durch seinen Spannungsabfall im Innenwiderstand Z_{N} des Stromversorgungsnetzes 13 eine Spannungsänderung in der Spannung U_{A} am Anschlusspunkt A des Umrichters 1. Damit sind Laständerungen unmittelbar in der Spannung U_{A} sichtbar.

Das Stromversorgungsnetz 13 weist dabei eine Netzspannung U_{N} auf, die eine vorgebbare Netzqualität der Netzspannung U_{N}, z.B. Grenzwerte für Flickererscheinungen einfordert.

Erfindungsgemäß regelt nunmehr die Regelung des aktiven Netzumrichters 2 nicht mehr auf eine konstante Zwischenkreisspannung U_{ZK}, sondern lässt Änderungen in der Zwischenkreisspannung U_{ZK} zu, um zu verhindern, dass Änderungen der Leistungsaufnahme der Last, z.B. des Motors 12 im Netzstrom I_{N} derart "sichtbar" werden, so dass sich Flicker ergeben. Der Zwischenkreiskondensator 5 wird dabei zunächst als Energiespeicher genutzt, um Laständerungen auszugleichen. Dies gelingt aber nicht bei jeder beliebigen Laständerung, sodass die Regelung des aktiven Netzumrichters 2 fortlaufend die maximal zulässige Netzstromänderung ΔI_{N} festlegt, bei der die Flickergrenzwerte gerade noch eingehalten werden.

Auf diese maximal zulässige Änderung wird durch das erfindungsgemäße Verfahren nunmehr die Stromänderung des bezogenen Netzstroms I_{N} begrenzt.

Die dazu erforderliche Netzimpedanz Z_{N} ist aus einer Netzanalyse des aktiven Netzumrichters 2 bekannt und bildet einen Eingangsparameter für die Regelung am Netzumrichter 2.

Die einzuhaltenden Flickergrenzwerte gelten für die einzelnen Phasenspannungen am Anschlusspunkt U_{A} gegen den Sternpunkt des Netzes, weil Beleuchtungseinrichtungen in der Regel einphasig angeschlossen werden.

In einer vorteilhaften Ausführungsform der Erfindung werden die zulässigen Stromänderungen ΔI_{N}, daher für alle drei Phasen des Stromversorgungsnetzes 13 getrennt berechnet.

Das erfindungsgemäße Verfahren eignet sich auch für spezielle Industrienetze, die nicht ein- oder dreiphasig ausgelegt sind.

Das erfindungsgemäße Verfahren zur Regelung eines aktiven Netzumrichters läuft dabei, gemäß FIG 2 wie folgt ab:
In einem ersten Schritt wird zunächst mittels des aktiven Netzumrichter 2 des Umrichters 1 die Netzimpedanz des Stromversorgungsnetzes 13 ermittelt. Danach wird in einem weiteren Schritt bei der aktuell am Umrichter 1 anliegenden Last fortlaufend die Berechnung der max. zulässig Netzstromänderungen ΔI_{N} vorgenommen, bei der die vorgegebenen Flickergrenzwerte noch eingehalten werden.

In einem weiteren Schritt wird die dadurch geänderte Zwischenkreisspannung U_{ZK} überprüft, ob entweder eine Abschaltung des angeschlossenen Verbrauchers, z.B. des Motors 12 oder aber eine Verletzung der vorgegebenen Flickergrenzwerte vorliegt oder akzeptiert wird.

Mit steigenden Laständerungen kann dies dazu führen, dass die Zwischenkreisspannung eine Abschaltschwelle für Über- oder Unterspannung erreicht.

Um diesen Zustand zu vermeiden, wird deshalb in einem weiteren Verfahrensschritt eine Warnmeldung am Gerät und/oder einer übergeordneten Warte vorausgeschickt, um beispielsweise einen zusätzlichen Zwischenkreiskondensator vorzusehen bzw. zuzuschalten, um diesen Zielkonflikt bei zukünftigen Laständerungen zu vermeiden. Aus der Höhe kann dabei berechnet werden, wie groß die Zwischenkreiskapazität sein muss.

Idealerweise wird diese Warnmeldung bereits vor Erreichen der Abschaltschwelle abgesetzt, z.B. 10% vor der Abschaltschwelle.

Um diesen Zustand für die weitere Betriebsdauer des Verbrauchers zu vermeiden, erzeugt die Regelung des Umrichters 1 in diesem Fall erfindungsgemäß die oben erwähnten Warnmeldungen, dass ein zusätzlicher Zwischenkreiskondensator angeschlossen werden sollte, um diesen Zielkonflikt in Zukunft zu vermeiden.

Aus der Höhe der Überschreitung der zulässigen Stromänderung ΔI_{N} kann zudem berechnet werden, wieviel Zubau einer weiteren Zwischenkreiskapazität erforderlich ist, um die (bekannten) Lastschwankungen dieses Verbrauchers an dem Umrichter 1 zukünftig auszugleichen.

Bei einem passiven Netzumrichter mit Diodeneinspeisung in den Zwischenkreis 4 werden die Flickeremissionen folgendermaßen vermieden. (Dabei kann die Prinzipdarstellung des Umrichters 1 dementsprechend übernommen werden). Da einem passiven Diodengleichrichter in der Regel die Netzimpedanz nicht bekannt ist, speichert dieser die lokalen Maxima der Zwischenkreisspannung gemäß FIG 2. Diese entsprechen den Maxima der Netzspannung U_{N} am Anschlusspunkt A. Aus dem Unterschied zwischen diesen Maxima kann die Spannungsschwankung am Anschlusspunkt A bestimmt werden.

Erfindungsgemäß wird die Beobachtungszeit für die Änderungen der Spannung U_{A} begrenzt, z.B. auf einen Zeitraum einer Sekunde. Damit wird verhindert, dass Änderung in der idealen Netzspannung U_{N} als Flickeremission fehlinterpretiert werden.

Um dementsprechende Fehlinterpretationen des Verfahrens des Umrichters 1 weiter zu reduzieren, wird erfindungsgemäß eine zeitliche Korrelation zwischen Änderungen der Zwischenkreisspannung und Änderungen der Leistung am Lastausgang hergestellt. Nur wenn die Änderungen der Zwischenkreisspannung auch mit Leistungsänderungen am Umrichterausgang zeitlich korrelieren, wird diese Spannungsänderung als Flicker interpretiert. Damit wird sichergestellt, dass nicht Unsymmetrien in der Netzspannung, verursacht von anderen Verbrauchern, als Flicker interpretiert werden.

Nur wenn eine zeitliche Korrelation vorliegt, also die Spannungsänderung aufgrund Laständerungen erfolgt, wird also erfindungsgemäß in die Regelung des Stromes I_{N} eingegriffen.

Grundsätzlich - dies gilt für einen sowohl für den aktiven als auch den passiven Netzumrichter, wird die Netzspannung des Stromversorgungsnetzes 13 für den Zwischenkreis 4, genauer Gleichspannungszwischenkreis gleichrichtet und dem Lastumrichter 3, der die Spannung des Zwischenkreises 4 für einen Verbraucher, also eine Last 12 wechselrichtet, bereitgestellt.

Es sind auch Einzelmerkmale der jeweiligen Ausführungen bei den aktiven oder passiven Netzumrichtern, soweit sinnvoll kombinierbar, ohne das Wesen der Erfindung zu verlassen.

## Patentansprüche

1. Verfahren zur Vermeidung von Flickeremissionen eines aktiven Netzumrichters (2) an einem Stromversorgungsnetz (13), wobei ein Umrichter (1) einen Lastumrichter (3) zur Versorgung einer elektrischen Last, einen aktiven Netzumrichter (2) an einem Anschlusspunkt (A) des elektrischen Stromversorgungsnetzes (13), zur Speisung eines Zwischenkreises (4) mit einer Zwischenkreisspannung U_{ZK} des Umrichters (1), wobei der Zwischenkreises (4) zumindest einen Kondensator (5) aufweist, durch folgende Schritte:
- Ermittlung der Netzimpedanz Z_{N} des Stromversorgungsnetzes (13) aus einer Netzanalyse des aktiven Netzumrichters (2) an dem Anschlusspunkt (A),
- Regelung des aktiven Netzumrichters (2) auf eine vorgebbare zulässige Netzstromänderung ΔI_{N}, bei der zulässige Änderungen des Effektivwertes von aufeinanderfolgenden Spannungshalbschwingungen der Spannung U_{A} am Anschlusspunkt (A) im Hinblick auf die Netzimpedanz Z_{N} eingehalten werden.

2. Verfahren nach Anspruch 1, **dadurch gekenn**- **zeichnet,** dass bei weiteren steigenden Laständerungen, die zur Erreichung einer Abschaltschwelle der Zwischenkreisspannung U_{ZK} des Umrichters (1) führen eine Warnmeldung abgesetzt wird.

3. Verfahren nach Anspruch 2, **dadurch gekenn**- **zeichnet**, dass die Warnmeldung bei einem vorgebbaren Abstand zur Abschaltschwelle, insbesondere 10% abgesetzt wird.

4. Verfahren nach einem der vorhergehenden Ansprüche, **da**- **durch gekennzeichnet**, dass das Verfahren bei einer einphasigen Last an einem öffentlichen oder industriellen Stromversorgungsnetz (13) durchgeführt wird.

5. Verfahren nach einem der vorhergehenden Ansprüche 1 bis 3, **dadurch gekennzeichnet, dass** das Verfahren bei einer dreiphasigen Last separat an jeder elektrischen Phase des öffentlichen oder industriellen Stromversorgungsnetzes (13) durchgeführt wird und bei jeder Phase die zulässigen Änderungen des Effektivwertes von aufeinanderfolgenden Spannungshalbschwingungen der Spannung U_{A} am Anschlusspunkt (A) im Hinblick auf die Netzimpedanz Z_{N} eingehalten werden.

6. Verfahren zur Vermeidung von Flickeremissionen eines passiven Netzumrichters (14) an einem Stromversorgungsnetz (13), wobei ein Umrichter (1) einen Lastumrichter (3) zur Versorgung einer elektrischen Last, einen passiven Netzumrichter (14) an einem Anschlusspunkt (A)des elektrischen Stromversorgungsnetzes (13), zur Speisung eines Zwischenkreises (4) mit einer Zwischenkreisspannung U_{ZK} des Umrichters (1), wobei der Zwischenkreises (4) zumindest einen Kondensator (5) aufweist durch folgende Schritte:
- Speicherung von lokalen Maxima der Zwischenkreisspannung U_{ZK} und daraus Ermittlung der Spannungsschwankung am Anschlusspunkt (A) des Umrichters (1) am Stromversorgungsnetz (13),
- Regelung des Netzstromes I_{N}, um die Zwischenkreisspannung U_{ZK} in einem Bereich zu halten, der die Flickeremissionen einhält, indem die zulässigen Änderungen des Effektivwertes von aufeinanderfolgenden Spannungshalbschwingungen der Spannung U_{A} am Anschlusspunkt (A) eingehalten werden.

7. Verfahren zur Vermeidung von Flickeremissionen eines passiven Netzumrichters (14) an einem Stromversorgungsnetz (13) nach Anspruch 6, **dadurch gekennzeichnet, dass** das Verfahren in einer vorgebbar begrenzen Beobachtungszeit die Änderungen der Spannung U_{A} ermittelt und diese Ermittlung turnusmäßig wiederholt wird.

8. Verfahren zur Vermeidung von Flickeremissionen eines passiven Netzumrichters (14) an einem Stromversorgungsnetz (13) nach Anspruch 6 oder 7, **dadurch gekenn**- **zeichnet**, dass durch eine zeitliche Korrelation von Änderungen der Zwischenkreisspannung U_{ZK} und Änderungen der Leistung am Lastausgang hergestellt wird, um Fehlinterpretationen einer Spannungsänderung U_{A} als Flicker zu unterdrücken.

9. Verfahren nach einem der Ansprüche 6 bis 8, **dadurch gekennzeichnet, dass** bei weiteren steigenden Laständerungen, die zur Erreichung einer Abschaltschwelle der Zwischenkreisspannung U_{ZK} des Umrichters (1) führen eine Warnmeldung abgesetzt wird.

10. Verfahren nach Anspruch 9, **dadurch gekenn-zeichnet**, dass die Warnmeldung bei einem vorgebbaren Abstand zur Abschaltschwelle, insbesondere 10% abgesetzt wird.

11. Verwendung der Verfahren nach Anspruch 1 bis 5 zur Regelung deines aktiven Netzumrichters (2) und Anspruch 6 bis 11 zur Regelung eines passiven Netzumrichters (14) bei einphasigen Verbrauchern, insbesondere Haushaltsgeräte und dreiphasigen Verbrauchern, insbesondere elektrischen Antrieben.

12. Umrichter mit einem Lastumrichter zur Versorgung einer elektrischen Last, einem aktiven Netzumrichter (2) an einem Anschlusspunkt A eines elektrischen Stromversorgungsnetzes (13), zur Speisung eines Zwischenkreises des Umrichters (1), wobei der Zwischenkreises zumindest einen Kondensator (5) aufweist, und der Umrichter mittels eines Verfahrens nach Anspruch 1 bis 5 unzulässige Flickeremissionen vermeidet.

13. Umrichter mit einem Lastumrichter zur Versorgung einer elektrischen Last, einem passiven Netzumrichter (14) an einem Anschlusspunkt A eines elektrischen Stromversorgungsnetzes (13), zur Speisung eines Zwischenkreises des Umrichters (1), wobei der Zwischenkreises zumindest einen Kondensator (5) aufweist, und der Umrichter mittels eines Verfahrens nach Anspruch 6 bis 11 unzulässige Flickeremissionen vermeidet.

14. Elektrischer Verbraucher, wie elektrische Antriebe, Haushaltsgeräte mit einem Umrichter, nach Anspruch 12 oder 13.
